# EUROPEAN PATENT SPECIFICATION

(11) **EP 3 799 674 B1**
(45) Date of publication and mention of the grant of the patent: **04.01.2023**
(21) Application number: 18926262.9
(22) Date of filing: 13.07.2018
(51) Int. Cl.: H02M 3/28

(54) **POWER SUPPLY CIRCUIT, CONTROLLING METHOD AND ELECTRIC EQUIPMENT**
LEISTUNGSVERSORGUNGSSCHALTUNG, STEUERUNGSVERFAHREN UND ELEKTRONISCHE AUSRÜSTUNG
CIRCUIT D'ALIMENTATION ÉLECTRIQUE, PROCÉDÉ DE COMMANDE ET ÉQUIPEMENT ÉLECTRIQUE

(43) Date of publication of application: 07.04.2021
(73) Proprietor: Tridonic GmbH & Co KG, 6851 Dornbirn (AT)
(72) Inventor: MAO, Qiuxiang, Shenzhen, Guangdong 518109 (CN)
(74) Representative: Rupp, Christian
(86) International application number: PCT/CN2018/095617
(87) International publication number: WO 2020/010609

(56) References cited:
- EP-A1- 2 372 890
- WO-A1-2010/050476
- JP-A- 2006 149 092
- JP-U- S5 246 217
- SU-A1- 1 056 392
- US-A1- 2007 133 236
- US-A1- 2016 120 002
- US-A1- 2016 164 425
- US-A1- 2017 279 363
- US-A1- 2017 279 363
- US-B1- 9 112 422

## Description

### TECHNICAL FIELD

Embodiments of the present disclosure generally relate to the field of voltage conversion, and more particularly, to a power supply circuit, a controlling method and an electric equipment.

### BACKGROUND

This section introduces aspects that may facilitate better understanding of the present disclosure. Accordingly, the statements of this section are to be read in this light and are not to be understood as admissions about what is in the prior art or what is not in the related art.

In the field of power conversion, a switching element and a transformer may be included in a power supply circuit. The switching element may be controlled to be switched on or off, a voltage generated in a primary wind of the transformer changes, and an induced voltage is generated in a secondary wind of the transformer. The voltage generated in the secondary wind will be rectified and filtered, so as to generate an output voltage.

Therefore, the input voltage is converted into the output voltage. The output voltage may change according to the switching frequency and duty ratio of a controlling signal that controls the switching element.

The controlling signal may be generated and provide by a controller. The controller may be powered by an auxiliary winding that is coupled with the primary winding.

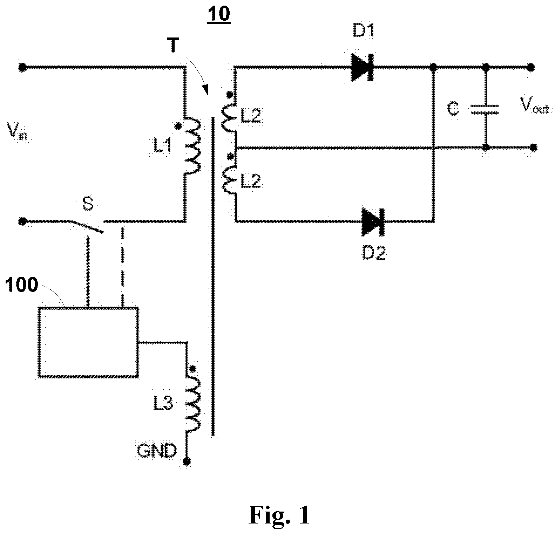

Fig. 1 is a diagram of a power supply circuit. As shown in Fig. 1, the power supply circuit 10 includes a switching element S, a transformer T, at least two rectifying diode D1 and D2, an auxiliary winding L3, and a controller 100.

The switching element S is controlled by the controller 100. The transformer T includes a primary winding L1 and a secondary winding L2. The auxiliary winding L3 is coupled to the primary winding L1, and voltage will be generated at one terminal of the auxiliary winding L3. The controller 100 is powered by the voltage generated at the terminal of the auxiliary winding L3.

The primary side 10a of the power supply circuit 10 may have the topology of LLC resonant circuit, LC resonant circuit or PWM (Pulse Width Modulation) circuit.

The secondary side 10b of the power supply circuit 10 may include at least two rectifying diodes D1 and D2, which is used to rectifying voltage generated on the secondary winding L2. As shown in Fig. 1, the rectifying diodes D1 and D2 are contained in a half bridge rectifier. Capacitor C can be used to filter the output voltage Vₒᵤₜ. However, in another example, the rectifying diodes D1 and D2 may be contained in a full bridge rectifier.

For the power supply circuit 10 in single fault test to get safety approval, one rectifying diode in D1 and D2 will be open, the other rectifying diode becomes very hot to exceed limit because more current flow through the other rectifying diode. When one rectifying diode is open, the power supply circuit 10 can still work, another diode will get hot and fail in safety test.

In related art, there are two solutions for solving the problem of one rectifying diode getting hot.

The first solution is to arrange additional diode in parallel with D1 or D2. Fig.2 shows one solution. As shown in Fig. 2, at the secondary side of the power supply circuit 10, diode D11 is arranged in parallel with D1, diode D21 is arranged in parallel with D2. When diode D1 or D2 is open, the diode D11 or D21 which is in parallel with diode D1 or D2 can still work. Therefore, the rectifying diode will not get hot.

The second solution is to use low withstanding voltage Schottky diodes as the rectifying diodes. When one Schottky diode is open, another Schottky diode will breakdown by high reverse voltage. In US 2007/0133236 A1, a power supply circuit comprising a single rectifying diode is disclosed. When the single rectifying diode fails (open circuit), the voltage provided to the controller may be one of a surge voltage or an excessive voltage, and the controller stops generating the controlling signal only by being provided with the excessive voltage.

### SUMMARY

Inventors of this disclosure found the two solutions above mentioned have their respective drawbacks: for the first solution, the additional diodes of D11 and D21 will bring additional cost; for the second solution, Schottky diode will bring higher cost, furthermore, when load condition changes, the second solution will not work well, thus the reliability is low.

In general, embodiments of the present disclosure provide a power supply circuit, a controlling method and an electric equipment. In the embodiments, when one of the at least two rectifying diodes is open, the voltage provided to the controller will be shutdown voltage, so that the controller stops generating a controlling signal and the power supply circuit stops work. Therefore, the rectifying diode will not get hot, the cost is low and the reliability is high.

In a first aspect, a power supply circuit is provided according to claim 1.

According to the invention, the voltage generator includes:
an auxiliary winding, arranged on the primary side, and arranged between a first node and a second node, the auxiliary winding couples to a primary winding of the primary side of the voltage convertor circuit; a first diode, arranged in a first branch connecting the first node and the power supply terminal of the controller; a second diode (D34), arranged in a second branch connecting the first node and the power supply terminal of the controller; and a Zener diode, arranged in the second branch, the operating voltage is provided through the first branch, the shutdown voltage is provided through the second branch.

In an embodiment, the cathode of the second diode is coupled to the first node, the anode of the second diode is coupled to the anode of the Zener diode.

In an embodiment, the power supply circuit further comprises: a resistor, arranged in series with the second diode and the Zener diode in the second branch.

In an embodiment, the anode of the first diode is coupled to the first node.

In an embodiment, the second node is coupled to a ground potential.

In a second aspect, an electric equipment is provided. The electric equipment includes the power supply circuit according to any one of above embodiments.

In a third aspect, a controlling method according to claim 8 is provided.

According to various embodiments of the present disclosure, when one of the at least two rectifying diodes is open, the voltage provided to the controller will be shutdown voltage, so that the controller stops generating a controlling signal and the power supply circuit stops work. Therefore, the rectifying diode will not get hot, the cost is low and the reliability is high.

In a further aspect, a lighting device driver is provided, comprising the power supply circuit according to the invention.

### BRIEF DESCRIPTION OF THE DRAWINGS

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a diagram of a power supply circuit in related art;

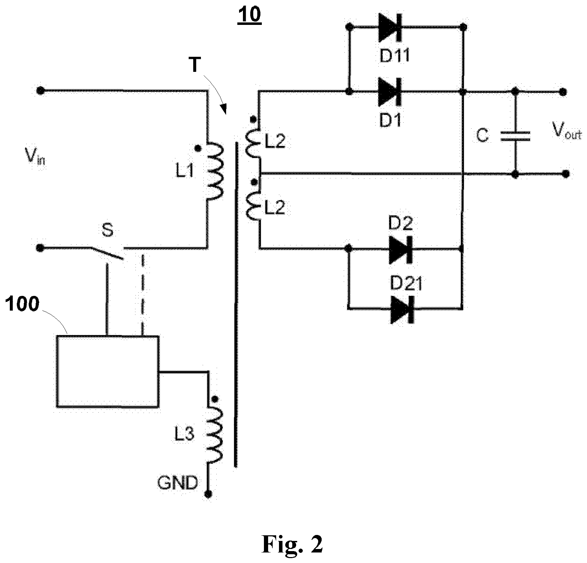

Fig.2 shows the first solution in related art;
Fig. 3 is a diagram of a power supply circuit in accordance with an embodiment of the present disclosure;
Fig. 4 is a diagram of the output voltage Vout when the power supply circuit is in normal operation;
Fig. 5 is a diagram of the output voltage Vout when one rectifying diode is open.
Fig. 6 is a flowchart of a controlling method 600 of the power supply circuit.

The invention is defined by the independent claims. Preferred embodiments are described by the dependent claims.

### DETAILED DESCRIPTION

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated in size, e.g., made larger in relation to other parts than in an exemplary device actually made according to the disclosure. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

### First aspect of embodiments

A power supply circuit is provided in a first embodiment.

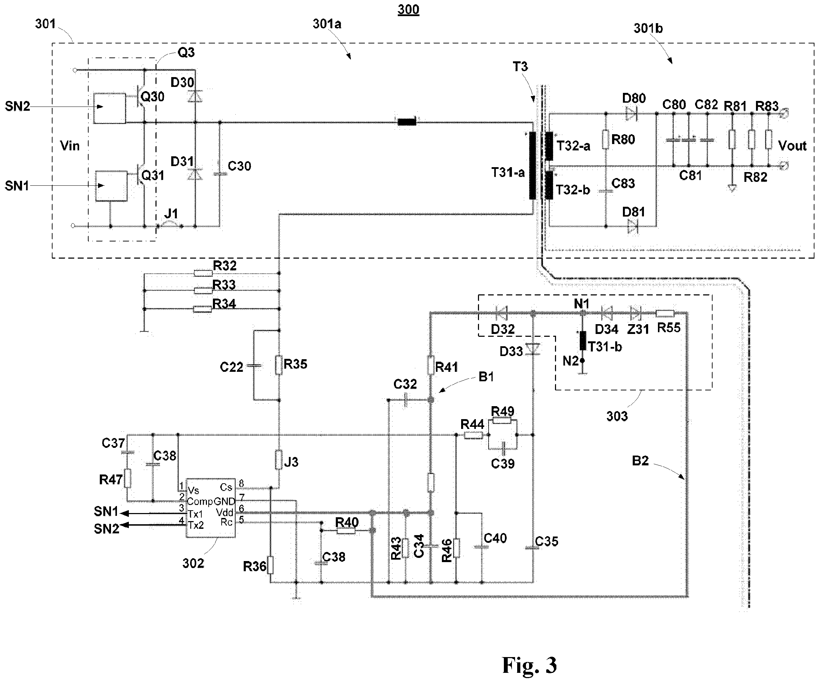

Fig. 3 is a diagram of a power supply circuit in accordance with an embodiment of the present disclosure. As shown in Fig. 3, the power supply circuit 300 includes a voltage convertor circuit 301, a controller 302, and a voltage generator 303.

In the embodiment, the voltage convertor circuit 301 is configured to convert an input voltage Vin into an output voltage Vout. The voltage convertor circuit 301 may have a primary side 301a and a secondary side 301b. The voltage convertor circuit 301 may be also configured to provide a defined output current.

The power supply circuit 300 with the voltage convertor circuit 301 may form a part of a lighting device driver. A lighting device, e.g. one or more light emitting diodes (LEDs), may be connected to the output voltage Vout. In an alternative embodiment a further driver circuit like a buck converter or buck-boost converter may be connected to the output voltage Vout and may be used to drive a lighting device. The output voltage Vout may be provided by output terminals in order to be able to connect a light device to the power supply circuit 300.

The voltage convertor circuit 301 may be also configured to provide a stable output voltage Vout at a defined output current. The output current may be defined depending on the intended use of LED as lighting device.

The primary side 301a has at least one switch unit Q3 which controls the primary side 301a to selectively feed the input voltage Vin. The secondary side 301b has at least two rectifying diodes D80 and D81, which are used to rectify voltage coupled from the primary side 301b.

In the embodiment, the controller 302 is configured to generate a controlling signal to control the switch unit Q3.

The voltage generator 303 is configured to be coupled to the primary side 301a. The voltage generator 303 is used to generate a voltage, and provide the voltage to a power supply terminal VDD (pin number 6) of the controller 302.

In the embodiment, when none of the at least two rectifying diodes D80 and D81 is open, the voltage provided to the controller 302 is an operating voltage of the controller 302, and the controller 302 generates the controlling signal by being provided with the operating voltage.

In the embodiment, when one of the at least two rectifying diodes D80 and D81 is open, the voltage provided to the controller 302 is shutdown voltage, and the controller 302 stops generating the controlling signal by being provided with the shutdown voltage.

According to the embodiment, when one of the at least two rectifying diodes is open, the controller 302 stops generating the controlling signal and the power supply circuit 300 will stop work. Therefore, the rectifying diode will not get hot, the cost is low and the reliability is high.

In the embodiment, as shown in Fig. 3, the voltage convertor circuit 301 may further include a transformer T3, a primary winding T31-a is contained in the primary side 301a, and secondary windings T32-a and T32-b are contained in the secondary side 301b.

The switch unit Q3 may include at least two switch elements Q30 and Q31, the at least two switch elements maybe MOSFET (Metal-Oxide-Semiconductor Field-Effect Transistor) or BJT (Bipolar Junction Transistor).

In the embodiment, other elements contained in the primary side 301a are not shown in Fig. 3, these elements may include a capacitor C30, two diodes D30 and D31, and an inductor L30. The function of these elements can be referred to related arts.

The primary side 301a of the voltage convertor circuit 301 may have the topology of a half bridge circuit with transformer T3, e.g. LLC resonant circuit, LC resonant circuit or PWM (Pulse Width Modulation) circuit. However, the embodiment is not limited there to, the primary side 301a may have other kind of topology.

The output voltage or output current may change according to the switching frequency and / or duty ratio of a controlling signal provided by controller 302 that controls the switching elements Q30 and Q31.

In the embodiment, the secondary side 301b of the voltage convertor circuit 301 may include a half bridge rectifier. The at least two rectifying diodes D80 and D81 may be contained in the half bridge rectifier. However, the embodiment is not limited there to, the secondary side 301b of the voltage convertor circuit 301 may include a full bridge rectifier, and the at least two rectifying diodes D80 and D81 may be contained in the full bridge rectifier.

In the embodiment, the secondary side 301b of the voltage convertor circuit 301 may further include capacitors C80~C83, and resistors R80~R83. The function of these elements can be referred to related arts.

In the embodiment, shown in Fig. 3, the voltage generator 303 may include: an auxiliary winding T31-b, a first diode D32, a second diode D34 and a Zener diode Z31.

In the embodiment, the auxiliary winding T31-b may be arranged on the primary side 301a, and arranged between a first node N1 and a second node N2. The auxiliary winding T31-b couples to the primary winding T31-a of the primary side 301a of the voltage convertor circuit 301.

The first diode D32 is arranged in a first branch B1 connecting the first node N1 and the power supply terminal Vdd of the controller 302.

The second diode D34 is arranged in a second branch B2 connecting the first node N1 and the power supply terminal Vdd of the controller 302.

The Zener diode Z31 is arranged in the second branch B2.

In the embodiment, the operating voltage is provided through the first branch B1, and the shutdown voltage is provided through the second branch B2.

As shown in Fig. 3, the cathode of the second diode D34 is coupled to the first node N1, the anode of the second diode D34 is coupled to the anode of the Zener diode Z31.

As shown in Fig. 3, the power supply circuit further includes a resistor R55. The resistor R55 is arranged in series with the second diode D34 and the Zener diode Z31 in the second branch B2.

As shown in Fig. 3, the anode of the first diode D32 is coupled to the first node N1, and the cathode of the first diode D32 is coupled to the power supply terminal Vdd of the controller 302.

As shown in Fig. 3, the second node N2 may be coupled to a ground potential.

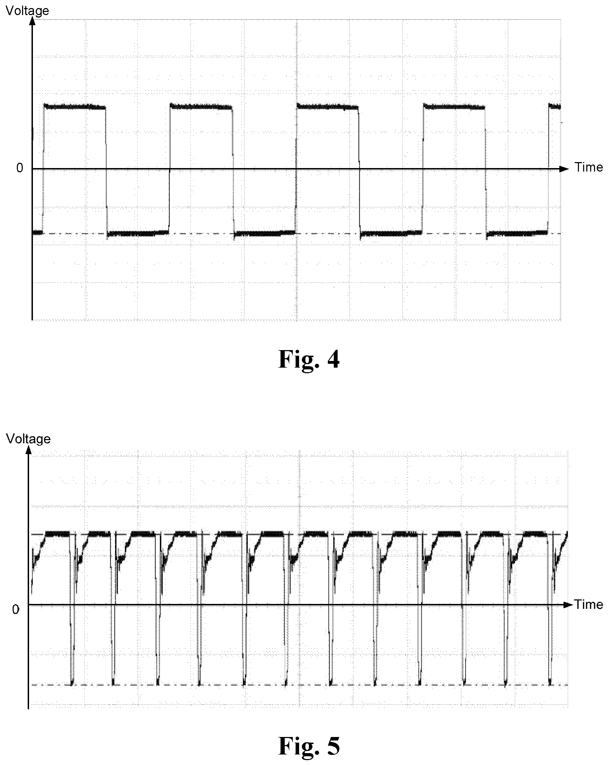

Fig. 4 is a diagram of the output voltage Vout when the power supply circuit is in normal operation. Fig. 5 is a diagram of the output voltage Vout when one rectifying diode is open.

When none of the at least two rectifying diodes D80 and D81 is open, the power supply circuit 300 is working in a normal operation. As shown in Fig. 4, the output voltage Vout is symmetrical in a lower level, for example, the maximum Vout in reverse direction is -9.33V, the maximum Vout in forward direction is 8.92V.

The operation voltage corresponding to the Vout in forward direction can be generated at the first node N1 of the auxiliary winding T31-b. The operation voltage can be in forward direction, and the first diode D32 conducts, so that the operation voltage can be provided to the power supply terminal Vdd through the first branch B1.

Besides, when the power supply circuit 300 is working in a normal operation, a voltage corresponding to the Vout in reverse direction can be generated at the first node N1 of the auxiliary winding T31-b. This reversed voltage is not higher than the breakdown voltage of the Zener diode Z31, hence, the reversed voltage will be blocked by the Zener diode Z31 and will not be provided to the power supply terminal Vdd.

When one of the at least two rectifying diodes D80 and D81 is open, for example D80 is open, the power supply circuit 300 is working in an abnormal operation. As shown in Fig. 5, the output voltage Vout is unsymmetrical, and the output voltage Vout in reverse direction is much higher than that is shown in Fig. 4. For example, the maximum Vout in reverse direction of Fig. 5 is -53.5V, the maximum Vout in forward direction of Fig. 5 is 14.45V.

According to Fig. 5, the shutdown voltage corresponding to the Vout in reverse direction can be generated at the first node N1 of the auxiliary winding T31-b. The shutdown voltage can be in reverse direction. The maximum Vout in reverse direction is very high, the reversed voltage at the first node N1 can be higher than the breakdown voltage of the Zener diode Z31, and the Zener diode Z31 can be in a state of breakdown.

Therefore, the second diode D34 conducts, the power supply terminal Vdd will discharge through the resistor R55, the Zener diode Z31, and the second diode D34. In another word, the reversed voltage generated at the first node N1 can be provided to the power supply terminal Vdd through the second branch B2.

In the embodiment, as shown in Fig. 3, the controller 302 may have: terminal Vs (pin number 1), terminal Comp (pin number 2), terminal Tx1 (pin number 3), terminal Tx2 (pin number 4), terminal Rc (pin number 5), terminal GND (pin number 7), and terminal Cs (pin number 8).

The terminal Vs is inputted a voltage signal corresponding to a voltage at the auxiliary winding. The voltage signal can be generated by a network including diode D33, capacitors C35, C40, C39, and resistors R49, R44, R46.

The terminal Cs is inputted a current signal corresponding to a current on the primary winding. The current signal can be generated by a network including resistors R32~R36, J3, and capacitor C35.

The terminal Rc is coupled to an external network including resistors C38, and capacitor R40. The terminal Rc is used to set the minimum switching frequency of the controlling signal.

The terminal Tx1 and Tx2 may output the controlling signal to the switch unit Q3, for example, the terminal Tx1 and Tx2 may output first controlling signal SN1 and second controlling signal SN2, respectively. The terminal Tx1 and Tx2 may be coupled to two terminals of a primary winding of a control transformer, and secondary windings of the control transformer will be used to turn the switch elements Q30 and Q31 on or off.

As shown in Fig. 3, functions of other elements listed in Fig. 3 can be referred to the related art.

In the embodiment, PSR (Primary Side Regulation) can be performed by the controller 302 in the power supply circuit 300.

According to the embodiment, when one of the at least two rectifying diodes at the secondary side is open, the voltage in reverse direction will be provided to the power supply terminal of the controller, and the controller stops generating the controlling signal and the power supply circuit will stop work. Therefore, the rectifying diode will not get hot, the cost is low and the reliability is high.

### Second aspect of embodiments

A controlling method of a power supply circuit of the first aspect of embodiments is provided in an embodiment. The same contents as those in the first aspect of embodiments are omitted.

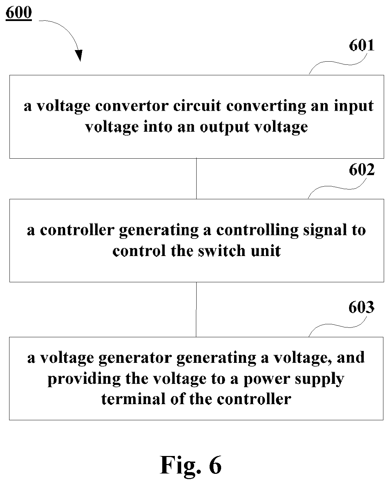

Fig. 6 shows a flowchart of a controlling method 600 of the power supply circuit.

As shown in Fig. 6, the method 600 includes:

Block 601: a voltage convertor circuit converting an input voltage into an output voltage;

Block 602: a controller generating a controlling signal to control the switch unit;

Block 603: a voltage generator generating a voltage, and providing the voltage to a power supply terminal of the controller.

In the block 603, when none of the at least two rectifying diodes being open, the voltage provided to the controller being an operating voltage of the controller, and the controller generates the controlling signal by being provided with the operating voltage. When one of the at least two rectifying diodes being open, the voltage provided to the controller being shutdown voltage, and the controller stops generating the controlling signal by being provided with the shutdown voltage.

As can be seen from the above embodiments, when one of the at least two rectifying diodes at the secondary side is open, the voltage in reverse direction will be provided to the power supply terminal of the controller, and the controller stops generating the controlling signal and the power supply circuit will stop work. Therefore, the rectifying diode will not get hot, the cost is low and the reliability is high.

### Third aspect of embodiments

An electric equipment is provided in an embodiment. The electric equipment includes the power supply circuit according to the first aspect of embodiments.

In the embodiment, the power supply circuit is configured to convert an input voltage into an output voltage, according to a controlling signal, as described in the first aspect of embodiments. The output voltage may be provided to drive a lighting device connected to the terminals for the output voltage or to a driver to drive a lighting device, the lighting device may be LED.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A power supply circuit (300), comprising:
a voltage convertor circuit (301), configured to convert an input voltage into an output voltage, the voltage convertor circuit (301) having a primary side (301a) and a secondary side (301b), the primary side (301a) having at least one switch unit (Q3) configured to control the primary side (301a) to selectively feed the input voltage in accordance with a controlling signal (SN2, SN1), the secondary side (301b) having at least two rectifying diodes (D80, D81) configured to rectify voltage coupled from the primary side (301a);
a controller (302), configured to generate the controlling signal (SN2, SN1) to control the switch unit (Q3); and
a voltage generator (303), configured to be coupled to the primary side (301a), configured to generate a voltage, and configured to provide the voltage to a power supply terminal (Vdd) of the controller (302),
when none of the at least two rectifying diodes (D80, D81) being in an open fail state, the voltage provided to the controller (302) being an operating voltage of the controller (302), and the controller (302) is configured to generate the controlling signal (SN2, SN1) by being provided with the operating voltage;
when one of the at least two rectifying diodes (D80, D81) being in the open fail state, the voltage provided to the controller (302) being a shutdown voltage, and the controller (302) is configured to stop generating the controlling signal (SN2, SN1) by being provided with the shutdown voltage,
wherein the voltage generator (303) comprises:
an auxiliary winding (T31-b), arranged on the primary side (301a), and arranged between a first node (N1) and a second node (N2), the auxiliary winding (T31-b) couples to a primary winding (T31-a) of the primary side (301a) of the voltage convertor circuit (301);
a first diode (D32), arranged in a first branch connecting the first node (N1) and the power supply terminal (Vdd) of the controller (302);
a second diode (D34), arranged in a second branch connecting the first node (N1) and the power supply terminal (Vdd) of the controller (302); and
a Zener diode (Z31), arranged in the second branch,
the operating voltage is provided through the first branch,
the shutdown voltage is provided through the second branch.

2. The power supply circuit (300) according to claim 1, wherein,
the cathode of the second diode (D34) is coupled to the first node (N1),
the anode of the second diode (D34) is coupled to the anode of the Zener diode (Z31).

3. The power supply circuit (300) according to claim 1, wherein, the power supply circuit (300) further comprises:
a resistor (R55), arranged in series with the second diode (D34) and the Zener diode (Z31) in the second branch.

4. The power supply circuit (300) according to claim 1, wherein,
the anode of the first diode (D32) is coupled to the first node (N1).

5. The power supply circuit (300) according to claim 1, wherein,
the second node (N2) is coupled to a ground potential.

6. An electric equipment, comprising the power supply circuit (300) according to one of claims 1-5.

7. A lighting device driver, comprising the power supply circuit (300) according to one of claims 1-5.

8. A controlling method (600) of a power supply circuit (300), the method (600) comprising:
providing a voltage convertor circuit (301) converting an input voltage into an output voltage, the voltage convertor circuit (301) having a primary side (301a) and a secondary side (301b), the primary side (301a) having at least one switch unit (Q3) which controls the primary side (301a) to selectively feed the input voltage in accordance with a controlling signal (SN2, SN1), the secondary side (301b) having at least two rectifying diodes (D80, D81), which being used to rectify voltage coupled from the primary side (301a);
providing a controller (302) generating the controlling signal (SN2, SN1) to control the switch unit (Q3); and
providing a voltage generator (303) generating a voltage, and providing the voltage to a power supply terminal (Vdd) of the controller (302), the voltage generator (303) being configured to be coupled to the primary side (301a), the voltage generator (303) comprising:
an auxiliary winding (T31-b), arranged on the primary side (301a), and arranged between a first node (N1) and a second node (N2), the auxiliary winding (T31-b) couples to a primary winding (T31-a) of the primary side (301a) of the voltage convertor circuit (301);
a first diode (D32), arranged in a first branch connecting the first node (N1) and the power supply terminal (Vdd) of the controller (302);
a second diode (D34), arranged in a second branch connecting the first node (N1) and the power supply terminal (Vdd) of the controller (302); and
a Zener diode (Z31), arranged in the second branch;
the voltage generator (303) further being configured such that when none of the at least two rectifying diodes (D80, D81) being in an open fail state, the voltage provided to the controller (302) being an operating voltage of the controller (302), and the controller (302) generates the controlling signal (SN2, SN1) by being provided with the operating voltage, the operating voltage being provided through the first branch;
the voltage generator (303) further being configured such that when one of the at least two rectifying diodes (D80, D81) being in the open fail state, the voltage provided to the controller (302) being a shutdown voltage, and the controller (302) stops generating the controlling signal (SN2, SN1) by being provided with the shutdown voltage, the shutdown voltage being provided through the second branch.

## Patentansprüche

1. Stromversorgungsschaltung (300), umfassend:
eine Spannungswandlerschaltung (301), die konfiguriert ist, um eine Eingangsspannung in eine Ausgangsspannung umzuwandeln, wobei die Spannungswandlerschaltung (301) eine Primärseite (301a) und eine Sekundärseite (301b) aufweist, wobei die Primärseite (301a) mindestens eine Schalteinheit (Q3) aufweist, die konfiguriert ist, um die Primärseite (301a) zu steuern, um die Eingangsspannung gemäß einem Steuersignal (SN2, SN1) selektiv zuzuführen, wobei die Sekundärseite (301b) mindestens zwei gleichrichtende Dioden (D80, D81) aufweist, die konfiguriert sind, um die Spannung gleichzurichten, die von der Primärseite (301a) gekoppelt ist;
eine Steuerung (302), die konfiguriert ist, um das Steuersignal (SN2, SN1) zu erzeugen, um die Schalteinheit (Q3) zu steuern; und
einen Spannungsgenerator (303), der konfiguriert ist, um mit der Primärseite (301a) gekoppelt zu werden, der konfiguriert ist, um eine Spannung zu erzeugen, und konfiguriert ist, um die Spannung an einen Stromversorgungsanschluss (Vdd) der Steuerung (302) bereitzustellen,
wenn sich keine der mindestens zwei gleichrichtenden Dioden (D80, D81) in einem offenen Ausfallzustand befindet, die Spannung, die an die Steuerung (302) bereitgestellt ist, eine Betriebsspannung der Steuerung (302) ist und die Steuerung (302) konfiguriert ist, um das Steuersignal (SN2, SN1) zu erzeugen, indem ihr die Betriebsspannung bereitgestellt wird;
wenn sich eine der mindestens zwei gleichrichtenden Dioden (D80, D81) in einem offenen Ausfallzustand befindet, die Spannung, die an die Steuerung (302) bereitgestellt ist, eine Abschaltspannung ist und die Steuerung (302) konfiguriert ist, um das Erzeugen des Steuersignals (SN2, SN1) zu stoppen, indem ihr die Abschaltspannung bereitgestellt wird,
wobei der Spannungsgenerator (303) umfasst:
eine Hilfswicklung (T31-b), die auf der Primärseite (301a) angeordnet ist und zwischen einem ersten Knoten (N1) und einem zweiten Knoten (N2) angeordnet ist, wobei die Hilfswicklung (T31-b) mit einer Primärwicklung (T31-a) der Primärseite (301a) der Spannungswandlerschaltung (301) koppelt;
eine erste Diode (D32), die in einem ersten Zweig angeordnet ist, der den ersten Knoten (N1) und den Stromversorgungsanschluss (Vdd) der Steuerung (302) verbindet;
eine zweite Diode (D34), die in einem zweiten Zweig angeordnet ist, der den ersten Knoten (N1) und den Stromversorgungsanschluss (Vdd) der Steuerung (302) verbindet; und
eine Zener-Diode (Z31), die in dem zweiten Zweig angeordnet ist,
die Betriebsspannung durch den ersten Zweig bereitgestellt wird,
die Abschaltspannung durch den zweiten Zweig bereitgestellt wird.

2. Stromversorgungsschaltung (300) nach Anspruch 1, wobei
die Kathode der zweiten Diode (D34) mit dem ersten Knoten (N1) gekoppelt ist,
die Anode der zweiten Diode (D34) mit der Anode der Zener-Diode (Z31) gekoppelt ist.

3. Stromversorgungsschaltung (300) nach Anspruch 1, wobei die Stromversorgungsschaltung (300) ferner umfasst:
einen Widerstand (R55), der in Reihe mit der zweiten Diode (D34) und der Zener-Diode (Z31) in dem zweiten Zweig angeordnet ist.

4. Stromversorgungsschaltung (300) nach Anspruch 1, wobei
die Anode der ersten Diode (D32) mit dem ersten Knoten (N1) gekoppelt ist.

5. Stromversorgungsschaltung (300) nach Anspruch 1, wobei
der zweite Knoten (N2) mit einem Erdungspotential gekoppelt ist.

6. Elektrische Ausrüstung, umfassend die Stromversorgungsschaltung (300) nach einem der Ansprüche 1 bis 5.

7. Leuchtvorrichtungstreiber, umfassend die Stromversorgungsschaltung (300) nach einem der Ansprüche 1 bis 5.

8. Steuerungsverfahren (600) einer Stromversorgungsschaltung (300), das Verfahren (600) umfassend:
Bereitstellen einer Spannungswandlerschaltung (301), die eine Eingangsspannung in eine Ausgangsspannung umwandelt, wobei die Spannungswandlerschaltung (301) eine Primärseite (301a) und eine Sekundärseite (301b) aufweist, wobei die Primärseite (301a) mindestens eine Schalteinheit (Q3) aufweist, die die Primärseite (301a) steuert, um die Eingangsspannung gemäß einem Steuersignal (SN2, SN1) selektiv zuzuführen, wobei die Sekundärseite (301b) mindestens zwei gleichrichtende Dioden (D80, D81) aufweist, die verwendet werden, um die Spannung gleichzurichten, die von der Primärseite (301a) gekoppelt ist;
Bereitstellen einer Steuerung (302), die das Steuersignal (SN2, SN1) erzeugt, um die Schalteinheit (Q3) zu steuern; und
Bereitstellen eines Spannungsgenerators (303), der eine Spannung erzeugt, und Bereitstellen der Spannung an einen Stromversorgungsanschluss (Vdd) der Steuerung (302), wobei der Spannungsgenerator (303) konfiguriert ist, um mit der Primärseite (301a) gekoppelt zu werden, der Spannungsgenerator (303) umfassend:
eine Hilfswicklung (T31-b), die auf der Primärseite (301a) angeordnet ist und zwischen einem ersten Knoten (N1) und einem zweiten Knoten (N2) angeordnet ist, wobei die Hilfswicklung (T31-b) mit einer Primärwicklung (T31-a) der Primärseite (301a) der Spannungswandlerschaltung (301) koppelt;
eine erste Diode (D32), die in einem ersten Zweig angeordnet ist, der den ersten Knoten (N1) und den Stromversorgungsanschluss (Vdd) der Steuerung (302) verbindet;
eine zweite Diode (D34), die in einem zweiten Zweig angeordnet ist, der den ersten Knoten (N1) und den Stromversorgungsanschluss (Vdd) der Steuerung (302) verbindet; und
eine Zener-Diode (Z31), die in dem zweiten Zweig angeordnet ist;
wobei der Spannungsgenerator (303) ferner derart konfiguriert ist, dass
wenn sich keine der mindestens zwei gleichrichtenden Dioden (D80, D81) in einem offenen Ausfallzustand befindet, die Spannung, die an die Steuerung (302) bereitgestellt ist, eine Betriebsspannung der Steuerung (302) ist und die Steuerung (302) das Steuersignal (SN2, SN1) erzeugt, indem ihr die Betriebsspannung bereitgestellt wird; wobei die Betriebsspannung durch den ersten Zweig bereitgestellt wird;
wobei der Spannungsgenerator (303) ferner derart konfiguriert ist, dass
wenn sich eine der mindestens zwei gleichrichtenden Dioden (D80, D81) in einem offenen Ausfallzustand befindet, die Spannung, die an die Steuerung (302) bereitgestellt ist, eine Abschaltspannung ist und die Steuerung (302) das Erzeugen des Steuersignals (SN2, SN1) stoppt, indem ihr die Abschaltspannung bereitgestellt wird, wobei die Abschaltspannung durch den zweiten Zweig bereitgestellt wird.

## Revendications

1. Circuit d'alimentation électrique (300), comprenant :
un circuit convertisseur de tension (301), configuré pour convertir une tension d'entrée en une tension de sortie, le circuit convertisseur de tension (301) ayant un côté primaire (301a) et un côté secondaire (301b), le côté primaire (301a) ayant au moins une unité de commutation (Q3) configurée pour commander le côté primaire (301a) pour appliquer sélectivement la tension d'entrée conformément à un signal de commande (SN2, SN1), le côté secondaire (301b) ayant au moins deux diodes de redressement (D80, D81) configurées pour redresser la tension couplées à partir du côté primaire (301a) ;
un contrôleur (302), configuré pour générer le signal de commande (SN2, SN1) pour commander l'unité de commutation (Q3) ; et
un générateur de tension (303), configuré pour être couplé au côté primaire (301a), configuré pour générer une tension, et configuré pour fournir la tension à une borne d'alimentation électrique (Vdd) du contrôleur (302),
lorsque aucune des au moins deux diodes de redressement (D80, D81) n'est dans un état de défaillance ouvert, la tension fournie au contrôleur (302) est une tension de fonctionnement du contrôleur (302), et le contrôleur (302) est configuré pour générer le signal de commande (SN2, SN1) en recevant la tension de fonctionnement ;
lorsque l'une des au moins deux diodes de redressement (D80, D81) est dans l'état de défaillance ouvert, la tension fournie au contrôleur (302) est une tension d'arrêt, et le contrôleur (302) est configuré pour arrêter de générer le signal de commande (SN2, SN1) en recevant la tension d'arrêt,
dans lequel le générateur de tension (303) comprend :
un enroulement auxiliaire (T31-b), agencé sur le côté primaire (301a), et agencé entre un premier nœud (N1) et un second nœud (N2), l'enroulement auxiliaire (T31-b) étant couplé à un enroulement primaire (T31-a) du côté primaire (301a) du circuit convertisseur de tension (301) ;
une première diode (D32), agencée dans une première branche reliant le premier nœud (N1) et la borne d'alimentation électrique (Vdd) du contrôleur (302) ;
une seconde diode (D34), agencée dans une seconde branche reliant le premier nœud (N1) et la borne d'alimentation électrique (Vdd) du contrôleur (302) ; et
une diode Zener (Z31), agencée dans la seconde branche,
la tension de fonctionnement est fournie à travers la première branche,
la tension d'arrêt est fournie à travers la seconde branche.

2. Circuit d'alimentation électrique (300) selon la revendication 1, dans lequel,
la cathode de la seconde diode (D34) est couplée au premier nœud (N1),
l'anode de la seconde diode (D34) est couplée à l'anode de la diode Zener (Z31).

3. Circuit d'alimentation électrique (300) selon la revendication 1, dans lequel, le circuit d'alimentation électrique (300) comprend en outre :
une résistance (R55), agencée en série avec la seconde diode (D34) et la diode Zener (Z31) dans la seconde branche.

4. Circuit d'alimentation électrique (300) selon la revendication 1, dans lequel,
l'anode de la première diode (D32) est couplée au premier nœud (N1).

5. Circuit d'alimentation électrique (300) selon la revendication 1, dans lequel,
le second nœud (N2) est couplé à un potentiel de masse.

6. Équipement électrique, comprenant le circuit d'alimentation électrique (300) selon l'une des revendications 1 à 5.

7. Circuit d'attaque de dispositif d'éclairage, comprenant le circuit d'alimentation électrique (300) selon l'une des revendications 1 à 5.

8. Procédé de commande (600) d'un circuit d'alimentation électrique (300), le procédé (600) comprenant :
fournir un circuit convertisseur de tension (301) convertissant une tension d'entrée en une tension de sortie, le circuit convertisseur de tension (301) ayant un côté primaire (301a) et un côté secondaire (301b), le côté primaire (301a) ayant au moins une unité de commutation (Q3) qui commande le côté primaire (301a) pour appliquer sélectivement la tension d'entrée conformément à un signal de commande (SN2, SN1), le côté secondaire (301b) ayant au moins deux diodes de redressement (D80, D81), qui sont utilisées pour redresser la tension couplées à partir du côté primaire (301a) ;
fournir un contrôleur (302) générant le signal de commande (SN2, SN1) pour commander l'unité de commutation (Q3) ; et
fournir un générateur de tension (303) générant une tension, et fournir la tension à une borne d'alimentation électrique (Vdd) du contrôleur (302), le générateur de tension (303) étant configuré pour être couplé au côté primaire (301a), le générateur de tension (303) comprenant :
un enroulement auxiliaire (T31-b), agencé sur le côté primaire (301a), et agencé entre un premier nœud (N1) et un second nœud (N2), l'enroulement auxiliaire (T31-b) étant couplé à un enroulement primaire (T31-a) du côté primaire (301a) du circuit convertisseur de tension (301) ;
une première diode (D32), agencée dans une première branche reliant le premier nœud (N1) et la borne d'alimentation électrique (Vdd) du contrôleur (302) ;
une seconde diode (D34), agencée dans une seconde branche reliant le premier nœud (N1) et la borne d'alimentation électrique (Vdd) du contrôleur (302) ; et
une diode Zener (Z31), agencée dans la seconde branche ;
le générateur de tension (303) étant en outre configuré de telle sorte que lorsque aucune des au moins deux diodes de redressement (D80, D81) n'est dans un état de défaillance ouvert, la tension fournie au contrôleur (302) est une tension de fonctionnement du contrôleur (302), et le contrôleur (302) génère le signal de commande (SN2, SN1) en recevant la tension de fonctionnement, la tension de fonctionnement étant fournie à travers la première branche ;
le générateur de tension (303) étant en outre configuré de telle sorte que lorsque l'une des au moins deux diodes de redressement (D80, D81) est dans l'état de défaillance ouvert, la tension fournie au contrôleur (302) est une tension d'arrêt, et le contrôleur (302) arrête de générer le signal de commande (SN2, SN1) en recevant la tension d'arrêt, la tension d'arrêt étant fournie à travers la seconde branche.
